# EUROPÄISCHE PATENTSCHRIFT

(11) **EP 3 703 531 B1**
(45) Veröffentlichungstag und Bekanntmachung des Hinweises auf die Patenterteilung: **16.03.2022**
(21) Anmeldenummer: 20702186.6
(22) Anmeldetag: 14.01.2020
(51) Int. Cl.: A45D 40/00, A45C 11/20, A45D 40/18, A45D 40/24, A47J 36/20, A47J 36/06

(54) **VERFAHREN UND BEHÄLTNIS ZUR ÜBERTRAGUNG VON INHALTSSTOFFEN AUS EINER DROGE IN EINE ZUBEREITUNG**
METHOD AND CONTAINER FOR TRANSFERRING SUBSTANCES FROM A DRUG INTO A PREPARATION
PROCÉDÉ ET RÉCIPIENT POUR TRANSFÉRER DES CONSTITUANTS D'UNE SUBSTANCE MÉDICINALE DANS UNE PRÉPARATION

(30) Priorität: 14.06.2019 AT 505352019
(43) Veröffentlichungstag der Anmeldung: 09.09.2020
(73) Patentinhaber: Haslauer, Paul, 5020 Salzburg (AT)
(72) Erfinder: Haslauer, Paul, 5020 Salzburg (AT)
(74) Vertreter: Wildhack & Jellinek
(86) Internationale Anmeldenummer: PCT/AT2020/060006
(87) Internationale Veröffentlichungsnummer: WO 2020/077379

(56) Entgegenhaltungen:
- WO-A1-2018/118845
- GB-A- 2 560 226
- KR-A- 20140 103 549
- US-A1- 2014 050 044
- US-B1- 7 252 091

## Beschreibung

Die Erfindung betrifft ein Kosmetikbehältnis zur Übertragung von Inhaltsstoffen aus einer Droge in eine Zubereitung.

Die Natur hält viele Inhaltsstoffe bereit, die der Mensch zu den unterschiedlichsten Zwecken für sich nutzbar gemacht hat. Dabei werden aufgrund der langen Haltbarkeit häufig Drogen, also natürliche, insbesondere getrocknete, Substrate und Teile von Pflanzen, Harzen o.ä., verwendet. Anwendung finden Drogen beispielsweise als Gewürze bei der Zubereitung von Mahlzeiten. Ein weiteres Einsatzgebiet ist die Verwendung als Wirkstoffe oder Duftstoffe in kosmetischen Zubereitungen.

Um eine Wirkung zu erzielen, ist es notwendig, die Inhaltsstoffe aus der Droge in eine Zubereitung zu übertragen, da die Zubereitung die Aufnahme der Inhaltsstoffe in den Körper erleichtert oder überhaupt erst ermöglicht. Die Inhaltsstoffe der Droge sollten dabei möglichst unverändert erhalten bleiben, damit die natürliche Wirksamkeit erhalten bleibt. Andere Bestandteile oder Verunreinigungen der Droge sollten jedoch nicht in die Zubereitung eingebracht werden. Da viele Inhaltsstoffe, wie beispielsweise ätherische Öle, hochwirksam sind, sollte eine ausgewogene Dosierung erfolgen. Inhaltsstoffe, wie beispielsweise ätherische Öle oder das in Zimt enthaltene Cumarin, können bei zu hoher Dosierung zu Reizungen oder unerwünschten Wirkungen führen. Diese Reizungen können bei einer akuten, sehr hohen Dosierung sofort, beispielsweise als Rötungen oder Unwohlsein, auffallen. Allerdings können auch bei niedrigeren Dosen, insbesondere bei langfristiger Anwendung, Reizungen auftreten, die nur schwer einer spezifischen Ursache zuzuordnen sind. Diese Reizungen können sich beispielsweise als Überempfindlichkeit der Haut, Juckreiz, Sodbrennen oder Schwindel äußern. Die Anwendung von Drogen sollte daher in hoher Qualität und in ausgewogenen Mengen erfolgen.

Flüssige und halbfeste Zubereitungen zum Auftragen auf die Haut umfassen regelmäßig Duftstoffe, wobei in hochwertigen Zubereitungen zumeist Auszüge aus natürlichen Drogen enthalten sind. Die Zusammensetzung solcher Auszüge unterscheidet sich von der Zusammensetzung der Inhaltsstoffe in der Droge. Da nicht bei allen Drogen bekannt ist, welche Inhaltsstoffe zur Wirkung beitragen, kann bei der Extraktion ein ungewollter Qualitätsverlust eintreten.

Auch durch den Kontakt mit den anderen Bestandteilen der Zubereitung, wie beispielsweise mit Gelbildnern oder Konservierungsstoffen, kommt es zu Veränderungen der Zusammensetzung der Inhaltsstoffe der Drogen. Vor allem bei längeren Lagerungszeiten, bzw. längerer Shelf-time, kommt es daher zu einem großen Qualitätsverlust. Dieser Qualitätsverlust ist für den Anwender teilweise sofort wahrnehmbar, wenn die Veränderung der Inhaltsstoffe einen veränderten Geruch verursacht. Es ist bekannt, dass durch Duftstoffe das limbische System stimuliert wird. Die Wahrnehmung des Geruchs beim Auftragen leistet daher einen wesentlichen Beitrag zur Zufriedenheit des Anwenders mit der Zubereitung und zur Wirkung einer Zubereitung. Aus dem Stand der Technik ist es daher beispielsweise bekannt, dass ein Drogenauszug erst bei der Anwendung mit der Zubereitung vermengt wird. Das Vermengen der verschiedenen Bestandteile ist für den Anwender bzw. die Anwenderin ein zusätzlicher Aufwand. Ein derartiges Kosmetikbehältnis ist beispielsweise in US 2014/0050044 gezeigt.

Es sind weiters Kosmetikbehältnisse bekannt, die zwei unterschiedliche von einander getrennte Lagerungsräume für die Zubereitung und den Drogenauszug aufweisen, wobei es bei Anwendung des Kosmetikums zu einer automatischen Vermischung der in den Lagerräumen gelagerten Flüssigkeiten bzw. flüssigen oder halbfesten Zubereitungen kommt, siehe z. B. WO 2018 118 845.

Dadurch kann vermieden werden, dass eine Veränderung der Inhaltsstoffe des Drogenauszugs durch Bestandteile der halbfesten Zubereitung, z.B. Konservierungsmittel, eintritt, es ist jedoch notwendig, den Drogenauszug selbst haltbar zu machen. Weiters kommt es bereits bei der Extraktion zu einem Qualitätsverlust.

Aufgabe der Erfindung ist es daher die Inhaltsstoffe einer Droge in hoher Qualität zur Anwendung am Körper, insbesondere auf der Haut bereitzustellen, wobei insbesondere keine Geruchsveränderung der Inhaltsstoffe der Droge stattfinden sollte, und wobei vorzugsweise eine einfache Anwendung der Zubereitung ermöglicht wird.

Erfindungsgemäß ist vorgesehen, dass im Inneren des Kosmetikbehältnisses ein vom Aufnahmebereich getrenntes Lagerkompartiment vorgesehen ist, wobei im Lagerkompartiment zumindest eine, insbesondere pflanzliche, Droge angeordnet ist, und wobei der Aufnahmebereich mit dem Lagerkompartiment in Atmosphärenverbindung steht oder in Atmosphärenverbindung bringbar ist.

Die Inhaltsstoffe der Droge stehen damit unverändert zur Verfügung und können ihre Wirkung voll entfalten. Drogen sind durch Trocknung haltbar gemachte natürliche Substrate, wie Teile von Pflanzen, Harze, o.ä. Während der Lagerung bzw. shelf time kann der Aufnahmebereich vom Lagerkompartiment getrennt sein, so dass die Inhaltsstoffe der Droge unverändert erhalten bleiben. Als Aufnahmeraum wird ein Hohlraum, oder ein einen Hohlraum umfassender Bereich verstanden, der zur Aufnahme einer Flüssigkeit, einer flüssigen oder halbfesten Zubereitung vorgesehen ist. Das Lagerkompartiment ist ein Hohlraum, in dem die Droge angeordnet ist. Vor der erstmaligen Anwendung können der Aufnahmebereich und das Lagerkompartiment in Atmosphärenverbindung gebracht werden. Wenn der Aufnahmebereich und das Lagerkompartiment in Atmosphärenverbindung stehen, ist entweder ein direkter Kontakt von Lagerkompartiment und Aufnahmebereich hergestellt, oder es ist ein Gasraum vorgesehen, der sowohl mit dem Aufnahmebereich, als auch mit dem Lagerkompartiment in Verbindung steht bzw. das Lagerkompartiment umfasst. Kosmetikbehältnisse, die Zubereitungen in einer Menge enthalten, die zur mehrmaligen Anwendung geeignet ist, können üblicherweise reversibel verschlossen werden, beispielsweise mit einem Deckel.

Kosmetikbehältnisse zur einmaligen Anwendung können in einer Verpackung gelagert sein, die das Kosmetikbehältnis von der Umgebung trennt. In verschlossenem oder verpacktem Zustand des Kosmetikbehältnisses bildet sich dabei eine gegenüber der Umwelt abgetrennte Atmosphäre aus und der Aufnahmeraum und das Lagerkompartiment stehen in Atmosphärenverbindung.

Die Atmosphärenverbindung zwischen Aufnahmeraum und Lagerkompartiment ist daher ein den Aufnahmeraum und das Lagerkompartiment umfassender, gegenüber der Umgebung abgegrenzter Bereich, der eine von der Umgebung unterschiedliche Atmosphäre aufweist, wobei die Unterschiede insbesondere in der Konzentration der Inhaltsstoffe der Droge liegen. Die flüssige oder halbfeste Zubereitung nimmt die von der Droge in diese Atmosphäre bzw. diesen Gasraum abgegebenen Inhaltsstoffe auf. Damit stehen die Inhaltsstoffe bei der Anwendung auf der Haut zur Verfügung. Eine Veränderung der Zusammensetzung der Inhaltsstoffe findet nicht statt.

Vorteilhafte Ausgestaltungen ergeben sich durch die folgenden Merkmale:
Die Herstellung und Anwendung der Zubereitung kann vereinfacht werden, wenn der den Aufnahmebereich bildende, insbesondere untere, Bereich des Kosmetikbehältnisses als Tiegel ausgebildet ist. Die Entnahme der Zubereitung kann vereinfacht werden, wenn der Aufnahmebereich flach ausgebildet ist und eine große Oberfläche als Entnahmeöffnung aufweist. Bei der Anwendung muss dann nicht tief in das Gefäß hineingegriffen werden und die Verkeimung der Zubereitung kann reduziert werden. Die große Oberfläche des Aufnahmebereichs ermöglicht gleichzeitig eine großflächige Aufnahme von Inhaltsstoffen der Droge aus der im Innenraum des Behältnisses gebildeten Atmosphäre in die Zubereitung.

Eine in der Herstellung und Anwendung einfache Möglichkeit zur Trennung von Aufnahmebereich und Lagerkompartiment kann vorsehen, dass das Lagerkompartiment durch eine entfernbare Folie vom Aufnahmebereich getrennt ist, wobei durch Entfernen der Folie der Aufnahmebereich mit dem Lagerkompartiment in Atmosphärenverbindung bringbar ist.

Um eine Aufnahme von Inhaltsstoffen, wie z.B. Duftstoffen, in die Zubereitung während der Lagerung zu vermeiden, und um somit einer Veränderung der Inhaltsstoffe vorzubeugen, kann vorgesehen sein, dass die Folie undurchlässig für flüchtige niedermolekulare organische Verbindungen ist. Wenn die Folie vor der Anwendung entfernt wird, beginnt die Beduftung der Zubereitung in voller Stärke und Qualität.

Eine besonders einfache Trennung von Aufnahmebereich und Lagerkompartiment kann vorgesehen sein, wenn das Kosmetikbehältnis einen den Aufnahmebereich reversibel verschließbaren Deckel umfasst und das Lagerkompartiment im Bereich des Deckels angeordnet ist. Es kann dabei vorgesehen sein, dass der Aufnahmebereich mit der entfernbaren Folie verschlossen ist und/oder dass der Deckel auf der dem Aufnahmebereich zugewandten Seite mit der entfernbaren Folie verschlossen ist.

Die Inhaltsstoffe der Zubereitung können besonders gut auf die Haut übertragen werden, wenn ein Applikator zum Auftragen der Zubereitung auf die Haut vorgesehen ist, wobei das Lagerkompartiment im Applikator-Inneren angeordnet ist, und wobei der Applikator zumindest in einem Auftragungsbereich derart ausgebildet ist, dass eine Atmosphärenverbindung zwischen dem Lagerkompartiment und dem Aufnahmebereich ermöglicht ist. Dabei kann insbesondere vorgesehen sein, dass das Lagerkompartiment vom Auftragungsbereich begrenzt wird.

Um eine besonders einfache Aufbewahrung des Applikators im Kosmetikbehältnis zu ermöglichen, kann vorgesehen sein, dass im Bereich der Entnahmeöffnung ein reversibel entfernbares, insbesondere aufklappbares, Gitter vorgesehen ist, auf dem der Applikator anordenbar ist. Alternativ kann vorgesehen sein, dass im Deckel ein Fach ausgebildet ist, wobei das Fach an der dem Inneren des Kosmetikbehältnisses zugewandten Seite ein Gitter aufweist, auf dem der Applikator anordenbar ist, und wobei insbesondere vorgesehen ist, dass die Oberseite des Fachs von einer reversibel verschließbaren, insbesondere aufklappbaren, Abdeckung gebildet ist. Dadurch kann weiters vermieden werden, dass bei der Anwendung in die Zubereitung gegriffen werden muss, sodass die Verkeimung der Zubereitung minimiert wird.

Um ein Verstopfen der Atmosphärenverbindungen zu vermeiden, kann vorgesehen sein, dass der Auftragungsbereich aus Organza gebildet ist, wobei vorzugsweise vorgesehen ist, dass das Lagerkompartiment vom Auftragungsbereich begrenzt wird. Organza quillt bei Kontakt mit Feuchtigkeit nicht, sodass ein dauerhafter Austausch zwischen Lagerkompartiment und Aufnahmebereich ermöglicht ist. In diesem Fall kann der Applikator auch in die Zubereitung eingelegt werden, ohne dass es zu einem Verstopfen der Atmosphärenverbindungen kommt. Es wird dadurch die Aufnahme der Inhaltsstoffe aus der Droge in die Zubereitung verbessert.

Eine besonders einfache Auftragung der Zubereitung wird ermöglicht, wenn der Applikator als Pad ausgebildet ist, wobei der die Atmosphärenverbindung ermöglichende Auftragungsbereich eine Auftragungsseite des Pads bildet, wobei insbesondere vorgesehen ist, dass eine dem Auftragungsbereich gegenüberliegende Halteseite vorgesehen ist, wobei an der Halteseite vorzugsweise ein Griff angeordnet ist. Die Auftragungsseite erlaubt ein flächiges Auftragen der Zubereitung auf die Haut, die als besonders angenehm empfunden wird. Unter Pad wird ein flaches kissen- oder mattenförmiges Pölsterchen verstanden, das üblicherweise eine Länge bzw. einen Durchmesser von 2 - 10 cm oder mehr aufweist und eine Höhe von bis zu 3 cm.

Bei manchen Drogen kann die Abgabe der Inhaltsstoffe in die Atmosphäre bzw. in die Zubereitung verbessert werden, wenn eine Vorbehandlung mit einer bestimmten Flüssigkeit oder einer flüssigen oder halbfesten Zubereitung vorgenommen wird. Beispielsweise kann die Abgabe der Inhaltsstoffe aus Cortex cinnamomi verbesserte werden, wenn die Droge mit Wasser vorgequollen ist.

Diese Vorbefeuchtung kann von außen mit Hilfe einer Injektionsspritze erfolgen. Es kann auch vorgesehen sein, dass im Applikator-Inneren ein weiterer Aufnahmebereich zur Aufnahme einer Flüssigkeit, oder einer flüssigen oder halbfesten Zubereitung vorgesehen ist, wobei der weitere Aufnahmebereich durch eine permeable Schicht vom Lagerkompartiment getrennt ist.

Der weitere Aufnahmebereich kann beispielsweise als Schwamm ausgebildet sein, wobei dadurch eine besonders sanfte Auftragung möglich wird.

Das Volumen des weiteren Aufnahmebereichs kann so gewählt werden, dass eine geeignete Vorbehandlung stattfindet.

Auch kann vorgesehen sein, dass das Volumen des weiteren Aufnahmebereichs so gewählt ist, dass die enthaltene Flüssigkeit oder Zubereitung durch das Lagerkompartiment zum Auftragungsbereich gelangen kann und beim Auftragen zusammen mit der Zubereitung aus dem Aufnahmeraum auf die Haut aufgebracht wird. Die Menge die aus dem weiteren Aufnahmebereich abgegeben wird, kann dann beispielsweise über den Anpressdruck mit dem der Applikator auf die Haut gedrückt wird reguliert werden. Dadurch kann eine individuelle Zusammensetzung für das jeweils gewünschte Anwendungsgebiet erzielt werden, wobei beispielsweise für empfindliche Hautbereiche, wie Hals und Dekollete, mit geringem Druck aufgetragen wird, als für unempfindliche Bereiche, wie Arme oder Beine.

Um eine besonders flächige Auftragung zu ermöglichen, kann vorgesehen sein, dass der Applikator eine formstabile Verstärkung aufweist.

Wenn ein weiterer Aufnahmebereich im Applikator vorgesehen ist, kann die permeable Schicht als Verstärkung ausgeführt sein. Dadurch kann die durch den Anpressdruck aus dem weiteren Aufnahmebereich abgegebene Menge besonders einfach und genau reguliert werden.

Um ein besonders hochwertiges Produkt bereitstellen zu können, kann vorgesehen sein, dass im Deckel ein Schwamm zur Abgabe einer Flüssigkeit oder einer flüssigen oder halbfesten Zubereitung angeordnet ist, wobei insbesondere vorgesehen ist, dass der Schwamm im Inneren des Kosmetikbehältnisses angeordnet ist oder dass der Deckel auf der Außenseite des Kosmetikbehältnisses ein reversibel verschließbares Fach aufweist, wobei der Schwamm in dem Fach angeordnet ist. Bei der Anwendung kann die Droge zunächst an den Schwamm angepresst werden und durch Aufnahme der Flüssigkeit bzw. der Zubereitung aus dem Schwamm aktiviert werden. Beispielsweise kann die Droge mit einem geeigneten Lösungsmittel, wie beispielsweise Wasser, in Kontakt gebracht werden und vorquellen. Auch ist beispielsweise eine Benetzung mit einem hochwertigen Öl als Extraktionsmittel möglich.

Es kann auch vorgesehen sein, dass das Kosmetikbehältnis als Applikator, insbesondere als Pad, ausgebildet ist, wobei der Applikator einen Auftragungsbereich aufweist, der insbesondere aus Organza besteht, wobei das Lagerkompartiment im Applikator-Inneren direkt an den Auftragungsbereich angrenzend angeordnet ist, wobei auf der dem Auftragungsbereich abgewandten Seite des Lagerkompartiments eine permeable Schicht, insbesondere eine Verstärkung, angeordnet ist, wobei auf der dem Lagerkompartiment gegenüberliegenden Seite der permeablen Schicht der Aufnahmebereich angeordnet ist, wobei der Aufnahmebereich komprimierbar ausgebildet ist, wobei im Aufnahmebereich eine flüssige oder halbfeste Zubereitung angeordnet ist, und wobei die permeable Schicht derart ausgebildet ist, dass sie bei Kompression des Aufnahmebereichs für die flüssige oder halbfeste Zubereitung durchlässig ist. Dabei stehen der Aufnahmebereich und das Lagerkompartiment bereits während der Lagerung in Atmosphärenverbindung. Diese Ausführungsform ist besonders kompakt und platzsparend und eignet sich daher vor allem auch für Reisen. Bei Bedarf kann der Applikator auch zur Auftragung einer weiteren Zubereitung verwendet werden.

Sowohl für einen Applikator in einem Kosmetikbehältnis, als auch für ein Kosmetikbehältnis, das als Applikator ausgebildet ist, kann vorgesehen sein, dass auf einer dem Auftragungsbereich gegenüberliegenden Halteseite, insbesondere an einem Griff, zwei Flügel, insbesondere aus einem für flüchtige niedermolekulare organische Verbindungen undurchlässigen Material, vorgesehen sind, die den Applikator umschließend anordenbar sind, wobei insbesondere vorgesehen ist, dass die Flügel eine entfernbare Verbindung aufweisen. Auf diese Weise kann die im Applikator-Inneren bzw. im Lagerkompartiment gelagerte Droge besonders einfach von der umgebenden Atmosphäre getrennt sein, um ein Austreten der Inhaltsstoffe der Droge zu vermeiden.

Für die Herstellung hochwertiger Kosmetika kann vorgesehen sein, dass als Droge, Lignum aquilariae resinatum und/oder Cortex cinnamomi, enthalten ist. Diese Drogen entfalten eine besonders angenehme Wirkung auf die Haut. Allerdings ist für diese Drogen bislang nicht bekannt, welche Inhaltsstoffe zur Wirkung beitragen, sodass durch die Herstellung eines Extraktes ein Qualitätsverlust auftreten würde, der erfindungsgemäß vermieden werden kann.

Erfindungsgemäß ist weiters ein Verfahren zur Lagerung einer flüssigen oder halbfesten Zubereitung zur Auftragung auf die Haut, wobei die flüssige oder halbfeste Zubereitung zusammen mit einer festen Droge innerhalb eines Behältnisses, insbesondere in einem zuvor beschriebenen Kosmetikbehältnis, gelagert wird, wobei die Droge für die Dauer der Lagerung von der Zubereitung räumlich getrennt wird, und wobei insbesondere vorgesehen ist, dass beim Auftragen die räumliche Trennung zumindest teilweise aufgehoben wird. Dadurch können die Inhaltsstoffe der Droge unverändert wirken und ein Qualitätsverlust kann vermieden werden.

Um eine besonders einfache Anwendung zu ermöglichen kann vorgesehen sein, dass zum Auftragen ein Applikator verwendet wird, wobei die Droge in einem im Applikator-Inneren angeordneten Lagerkompartiment gelagert ist und wobei zumindest in einem Auftragungsbereich des Applikators eine reversible Aufnahme der Zubereitung in das Lagerkompartiment ermöglicht ist.

Besonders vorteilhafte Ausführungsformen der Erfindung sind anhand der folgenden Zeichnungen ohne Einschränkung des allgemeinen erfinderischen Gedankens beispielhaft dargestellt.
- Fig. 1: zeigt ein beispielhaftes Kosmetikbehältnis mit einem Applikator.
- Fig. 2: zeigt einen beispielhaften alternativen Applikator im Querschnitt.
- Fig. 3: zeigt den Applikator aus Fig. 2 in Draufsicht.

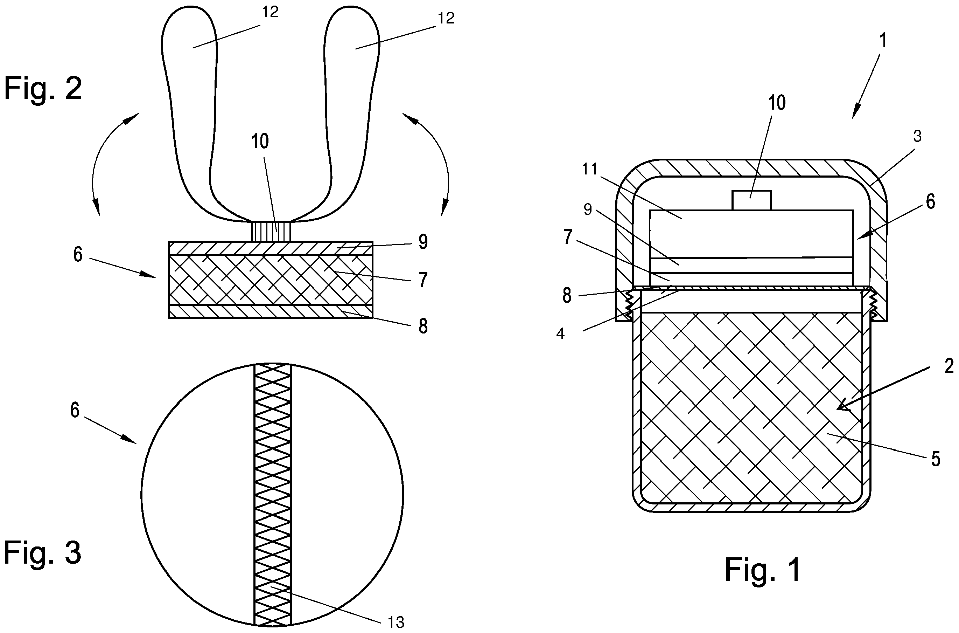

Fig. 1 zeigt ein beispielhaftes Kosmetikbehältnis 1 im Querschnitt. Das Kosmetikbehältnis 1 umfasst einen Tiegel mit einem Aufnahmebereich 2, der über einen Schraubverschluss mit einem Deckel 4 verschlossen ist. Im Aufnahmebereich 2 ist eine halbfeste Zubereitung 5 angeordnet. Der Tiegel weist eine Entnahmeöffnung zur Entnahme der Zubereitung 5 aus dem Aufnahmebereich 2 auf. Die Entnahmeöffnung ist mit einer entfernbaren Folie 4 verschlossen. Die Folie 4 ist undurchlässig für flüchtige niedermolekulare organische Verbindungen. Im Deckel 3 ist ein Applikator 6 angeordnet. Im Inneren des Applikators 6 ist ein Lagerkompartiment 7 mit einer pflanzlichen Droge angeordnet, im vorliegenden Beispiel handelt es sich dabei um Cortex cinnamomi bzw. Zimt.

Der in Fig. 1 dargestellte Applikator 6 ist als Pad ausgeführt. Das Pad weist an einer Auftragungsseite einen Auftragungsbereich 8 aus Organza auf. Beim Auftragen auf die Haut kann durch unterschiedliche Druckausübung ein sanftes Einreiben oder ein leichter Peeling-Effekt erzeugt werden. Der Organza ermöglicht eine Atmosphärenverbindung zwischen dem Lagerkompartiment und der umgebenden Atmosphäre. Direkt oberhalb des Organzas ist das Lagerkompartiment 7 angeordnet. An der dem Auftragungsbereich 8 gegenüberliegende Halteseite ist ein Griff 10 angeordnet. An der Halteseite ist im Applikator-Inneren ein weiterer Aufnahmebereich 11 ausgebildet. Vor der ersten Verwendung des Applikators 6 ist es besonders günstig, wenn die Zimtrinde für ca. 10 Minuten in Wasser zum Quellen gebracht wird. In der dargestellten Ausführungsform ist daher im weiteren Aufnahmebereich 11 die zum Vorquellen der im Lagerkompartiment 7 gelagerten Droge notwendige Menge Wasser enthalten.

Der weitere Aufnahmebereich 11 ist vom Lagerkompartiment 7 durch eine permeable Schicht 9 getrennt, die als Verstärkung ausgebildet ist. Durch Druck wird die permeable Schicht 9 durchlässig für die im weiteren Aufnahmebereich 11 gelagerte Flüssigkeit, sodass vor der ersten Anwendung das Wasser aus dem weiteren Aufnahmebereich 11 in das Lagerkompartiment 7 gedrückt werden kann.

Fig. 2 zeigt eine alternative Ausführungsform eines Applikators 6. Der Applikator 6 ist ebenfalls als Pad ausgebildet. Der die Atmosphärenverbindung ermöglichende Auftragungsbereich 8 bildet die Auftragungsseite des Pads. Der Auftragungsbereich 8 ist aus Organza gebildet. Weiters ist eine dem Auftragungsbereich 8 gegenüberliegende formstabile Halteseite mit Griff 10 vorgesehen. Zwischen Auftragungsbereich 8 und Halteseite ist das Lagerkompartiment 7 angeordnet. In der dargestellten Ausführungsform ist im Lagerkompartiment 7 als Droge Lignum aquilariae resinatum bzw. Oudh-Holz, angeordnet. An der Halteseite bzw. am Griff 10 sind zwei seitliche Flügel 12 angeordnet. Bei der Lagerung können die Flügel 12 um den Applikator 6 gelegt oder gefaltet werden, sodass die Auftragungsseite 8 abgedeckt ist. Zur Auftragung werden die Flügel 12 entsprechend nach oben abgehoben, sodass die Auftragungsseite 8 freigelegt wird.

Fig. 3 zeigt den Applikator 6 aus Fig. 2 im Lagerzustand vor der ersten Verwendung von der Unterseite. Die beiden Flügel 12 sind um den Applikator 6 gelegt und über der Auftragungsseite überlappend angeordnet. In der dargestellten Ausführungsform ist im überlappenden Bereich eine Verklebung 13 vorgesehen. Die Laschen sind aus einer für flüchtige niedermolekulare organische Verbindungen undurchlässigen Folie 4 gebildet, sodass durch die Flügel 12 das Lagerkompartiment 7 vom Aufnahmebereich 2 getrennt ist. Vor der ersten Verwendung des Applikators 6 wird die Verklebung 13 gelöst und die Flügel 12 werden nach oben abgehoben. Der in Fig. 2 und 3 dargestellte Applikator 6 kann beispielsweise in dem in Fig. 1 dargestellten Kosmetikbehältnis 1 statt des in Fig. 1 dargestellten Applikators 6 angeordnet werden.

Für die Lagerung der flüssigen oder halbfesten Zubereitung 5 innerhalb des Kosmetikbehältnisses 1 zusammen mit einer festen Droge kann daher für die Dauer der Lagerung eine räumliche Trennung von Zubereitung 5 und Droge hergestellt werden. Beim Auftragen wird der Applikator 6 in die Zubereitung 5 eingetaucht und damit die Zubereitung 5 aus dem Kosmetikbehältnis 1 entnommen. Dabei wird die räumliche Trennung von Lagerkompartiment 7 und Aufnahmebereich 2 teilweise aufgehoben. Die Zubereitung 5 dringt teilweise in den Applikator 6 ein, wobei die Zubereitung 5 insbesondere auch teilweise in einen Teil des Lagerkompartiments 7 aufgenommen wird. Beim Auftragen auf die Haut wird die Zubereitung 5 vom Applikator 6 bzw. auch aus dem Lagerkompartiment 7 auf die Haut abgegeben. Dabei werden die Inhaltsstoffe der Droge ebenfalls an die Haut abgegeben.

Das Kosmetikbehältnis 1 bzw. das Verfahren zur Lagerung der Zubereitung ermöglicht somit eine einfache Anwendung einer qualitativ besonders hochwertigen Zubereitung. Die Erfindung ist in den folgenden Ansprüchen definiert, andere Ausführungsbeispiele sind lediglich illustrativ.

## Patentansprüche

1. Kosmetikbehältnis, zur Aufbewahrung einer flüssigen oder halbfesten Zubereitung, wobei das Kosmetikbehältnis (1) einen Aufnahmebereich (2) zur Aufnahme der Zubereitung (5) umfasst, wobei im Inneren des Kosmetikbehältnisses (1) ein vom Aufnahmebereich (2) getrenntes Lagerkompartiment (7) vorgesehen ist, wobei ein Applikator (6) vorgesehen ist, wobei der Applikator (6) einen Auftragungsbereich (8) zum Auftragen der Zubereitung (5) auf die Haut aufweist, **dadurch gekennzeichnet, dass** im Lagerkompartiment (7) zumindest eine Droge (214) angeordnet ist, wobei das Lagerkompartiment (7) im Applikator-Inneren angeordnet ist und vom Auftragungsbereich (8) begrenzt wird, und wobei der Auftragungsbereich (8) derart ausgebildet ist, dass eine reversible Aufnahme der Zubereitung in das Lagerkompartiment (7) ermöglicht ist.

2. Kosmetikbehältnis nach Anspruch 1, wobei der Applikator (6) als Pad ausgebildet ist, wobei der Auftragungsbereich (8) eine Auftragungsseite des Pads bildet.

3. Kosmetikbehältnis nach Anspruch 1 oder 2, wobei im Applikator-Inneren ein weiterer Aufnahmebereich (11) zur Aufnahme einer Flüssigkeit oder einer flüssigen oder halbfesten Zubereitung vorgesehen ist, wobei der weitere Aufnahmebereich (11) durch eine weitere, insbesondere für die Flüssigkeit oder die Zubereitung permeable, Schicht (9) vom Lagerkompartiment (7) getrennt ist.

4. Kosmetikbehältnis nach einem der Ansprüche 1 bis 3, wobei der Applikator (6), insbesondere als weitere Schicht (9), eine formstabile Verstärkung aufweist.

5. Kosmetikbehältnis nach einem der Ansprüche 3 und 4, wobei das Kosmetikbehältnis als Applikator (6) ausgebildet ist, wobei der Applikator (6) einen Auftragungsbereich (8) aufweist, wobei das Lagerkompartiment (7) im Applikator-Inneren direkt an den Auftragungsbereich (8) angrenzend angeordnet ist, wobei auf der dem Auftragungsbereich (8) abgewandten Seite des Lagerkompartiments (7) eine permeable Schicht (9), angeordnet ist, wobei auf der dem Lagerkompartiment (7) gegenüberliegenden Seite der permeablen Schicht (9) der Aufnahmebereich (2) angeordnet ist, wobei der Aufnahmebereich (2) komprimierbar ausgebildet ist, wobei im Aufnahmebereich (2) eine flüssige oder halbfeste Zubereitung angeordnet ist, und wobei die permeable Schicht (9) derart ausgebildet ist, dass sie bei Kompression des Aufnahmebereichs (2) für die flüssige oder halbfeste Zubereitung durchlässig ist.

6. Kosmetikbehältnis nach einem der Ansprüche 1 bis 5, wobei im Lagerkompartiment (7) zumindest eine pflanzliche Droge angeordnet ist, wobei insbesondere vorgesehen ist, dass als Droge Lignum aquilariae resinatum und/oder Cortex cinnamomi enthalten ist.

7. Kosmetikbehältnis nach einem der Ansprüche 1 bis 6, wobei das Lagerkompartiment (7) durch eine, insbesondere für flüchtige niedermolekulare organische Verbindungen undurchlässige, entfernbare Folie (4) vom Aufnahmebereich (2) getrennt ist.

8. Kosmetikbehältnis nach einem der Ansprüche 1 bis 7, wobei das Kosmetikbehältnis einen den Aufnahmebereich (2) reversibel verschließbaren Deckel (3) umfasst und das Lagerkompartiment (7) im Deckel (3) angeordnet ist.

9. Kosmetikbehältnis nach einem der Ansprüche 1 bis 8, wobei der Auftragungsbereich (8) aus Organza gebildet ist.

10. Kosmetikbehältnis nach Anspruch einem der Ansprüche 2 bis 9, wobei eine dem Auftragungsbereich (7) gegenüberliegende Halteseite vorgesehen ist, wobei insbesondere vorgesehen ist, dass an der Haltseite ein Griff (10) angeordnet ist.

11. Kosmetikbehältnis nach einem der Ansprüche 1 bis 10, wobei auf einer dem Auftragungsbereich (8) gegenüberliegenden Halteseite, insbesondere an dem Griff (10), zwei Flügel (12), insbesondere aus einem für flüchtige niedermolekulare organische Verbindungen undurchlässigen Material, vorgesehen sind, die den Applikator umschließend anordenbar sind, wobei insbesondere vorgesehen ist, dass die Flügel (12) eine entfernbare Verbindung (13) aufweisen.

12. Verfahren zur Lagerung und Auftragung einer flüssigen oder halbfesten Zubereitung zur Auftragung auf die Haut,
**dadurch gekennzeichnet, dass** die flüssige oder halbfeste Zubereitung zusammen mit einer festen Droge innerhalb eines Kosmetikbehältnisses nach einem der Ansprüche 1 bis 11, gelagert wird, wobei die Droge für die Dauer der Lagerung von der Zubereitung räumlich getrennt wird,
wobei beim Auftragen die räumliche Trennung zumindest teilweise aufgehoben wird, wobei zum Auftragen der Applikator verwendet wird, wobei zumindest in einem Auftragungsbereich (8) des Applikators eine reversible Aufnahme der Zubereitung in das Lagerkompartiment (7) ermöglicht ist.

## Claims

1. Cosmetic container for storing a liquid or semi-solid preparation, wherein the cosmetic container (1) comprises a receiving section (2) for receiving the preparation (5), wherein a storage compartment (7) separate from the receiving section (2) is provided in the interior of the cosmetic container (1), wherein an applicator (6) is provided, wherein the applicator (6) has an application section (8) for applying the preparation (5) to the skin, **characterised in that** at least one drug (214) is arranged in the storage compartment (7), the storage compartment (7) being arranged in the interior of the applicator and being delimited by the application section (8), and the application section (8) being configured in such a way that reversible take-up of the preparation into the storage compartment (7) is made possible.

2. Cosmetic container according to claim 1, wherein the applicator (6) is configured as a pad, wherein the application section (8) forms an application side of the pad.

3. Cosmetic container according to claim 1 or 2, wherein a further receiving section (11) for receiving a liquid or a liquid or semi-solid preparation is provided in the applicator interior, the further receiving section (11) being separated from the storage compartment (7) by a further layer (9) which is permeable, in particular to the liquid or the preparation.

4. Cosmetic container according to any one of claims 1 to 3, wherein the applicator (6) has, in particular as a further layer (9), a dimensionally stable reinforcement.

5. Cosmetic container according to any one of claims 3 and 4, wherein the cosmetic container is configured as an applicator (6), wherein the applicator (6) has an application section (8), wherein the storage compartment (7) is arranged in the applicator interior directly adjacent to the application section (8), wherein a permeable layer (9) is arranged on the side of the storage compartment (7) facing away from the application section (8), wherein the receiving section (2) is arranged on the side of the permeable layer (9) opposite the storage compartment (7), wherein the receiving section (2) is configured to be compressible, wherein a liquid or semi-solid preparation is arranged in the receiving section (2), and wherein the permeable layer (9) is configured in such a way that it is permeable to the liquid or semi-solid preparation when the receiving section (2) is compressed.

6. Cosmetic container according to any one of claims 1 to 5, wherein at least one herbal drug is arranged in the storage compartment (7), wherein it is provided in particular that lignum aquilariae resinatum and/or cortex cinnamomi is contained as drug.

7. Cosmetic container according to any one of claims 1 to 6, wherein the storage compartment (7) is separated from the receiving section (2) by a removable film (4) that is impermeable, in particular to volatile low-molecular organic compounds.

8. Cosmetic container according to any one of claims 1 to 7, wherein the cosmetic container comprises a lid (3) that can reversibly close the receiving section (2), and the storage compartment (7) is arranged in the lid (3).

9. Cosmetic container according to any one of claims 1 to 8, wherein the application section (8) is formed from organza.

10. Cosmetic container according to claim any one of claims 2 to 9, wherein a holding side opposite the application section (7) is provided, wherein in particular it is provided that a handle (10) is arranged on the holding side.

11. Cosmetic container according to any one of claims 1 to 10, wherein two wings (12), in particular made of a material impermeable to volatile low-molecular organic compounds, are provided on a holding side opposite the application section (8), in particular on the handle (10), which wings can be arranged so as to surround the applicator, wherein in particular it is provided that the wings (12) have a removable connection (13).

12. Method for storing and applying a liquid or semi-solid preparation for application to the skin, **characterised in that** the liquid or semi-solid preparation is stored together with a solid drug within a cosmetic container according to any one of claims 1 to 11, the drug being spatially separated from the preparation for the duration of the storage, wherein during application the spatial separation is at least partially removed, wherein the applicator is used for application, wherein reversible take-up of the preparation into the storage compartment (7) is made possible in at least an application section (8) of the applicator.

## Revendications

1. Récipient cosmétique pour conserver une préparation liquide ou semi-solide, dans lequel le récipient cosmétique (1) comprend une zone de réception (2) pour recevoir la préparation (5), dans lequel un compartiment de stockage (7) séparé de la zone de réception (2) est prévu à l'intérieur du récipient cosmétique (1), dans lequel un applicateur (6) est prévu, dans lequel l'applicateur (6) présente une zone d'application (8) pour appliquer la préparation (5) sur la peau, **caractérisé en ce qu'**au moins une drogue (214) est disposée dans le compartiment de stockage (7), dans lequel le compartiment de stockage (7) est disposé à l'intérieur de l'applicateur et est délimité par la zone d'application (8), et dans lequel la zone d'application (8) est conçue de sorte qu'une réception réversible de la préparation dans le compartiment de stockage (7) est possible.

2. Récipient cosmétique selon la revendication 1, dans lequel l'applicateur (6) est conçu en tant que tampon, dans lequel la zone d'application (8) forme un côté d'application du tampon.

3. Récipient cosmétique selon la revendication 1 ou 2, dans lequel une zone de réception supplémentaire (11) est prévue à l'intérieur de l'applicateur pour recevoir un liquide ou une préparation liquide ou semi-solide, dans lequel la zone de réception supplémentaire (11) est séparée du compartiment de stockage (7) par une couche supplémentaire (9), en particulier perméable au liquide ou à la préparation.

4. Récipient cosmétique selon l'une quelconque des revendications 1 à 3, dans lequel l'applicateur (6) présente, en particulier en tant que couche supplémentaire (9), un renforcement indéformable.

5. Récipient cosmétique selon l'une quelconque des revendications 3 et 4, dans lequel le récipient cosmétique est conçu en tant qu'applicateur (6), dans lequel l'applicateur (6) présente une zone d'application (8), dans lequel le compartiment de stockage (7) est disposé à l'intérieur de l'applicateur de manière directement adjacente à la zone d'application (8), dans lequel une couche perméable (9) est disposée sur le côté du compartiment de stockage (7) opposé à la zone d'application (8), dans lequel la zone de réception (2) est disposée sur le côté de la couche perméable (9) opposé au compartiment de stockage (7), dans lequel la zone de réception (2) est conçue de manière compressible, dans lequel une préparation liquide ou semi-solide est disposée dans la zone de réception (2), et dans lequel la couche perméable (9) est conçue de sorte que, lors de la compression de la zone de réception (2), elle est perméable à la préparation liquide ou semi-solide.

6. Récipient cosmétique selon l'une quelconque des revendications 1 à 5, dans lequel au moins une drogue végétale est disposée dans le compartiment de stockage (7), dans lequel il est en particulier prévu que la drogue contenue est du lignum aquilariae resinatum et/ou du cortex cinnamomi.

7. Récipient cosmétique selon l'une quelconque des revendications 1 à 6, dans lequel le compartiment de stockage (7) est séparé de la zone de réception (2) par un film amovible (4), en particulier imperméable aux composés organiques volatils de faible poids moléculaire.

8. Récipient cosmétique selon l'une quelconque des revendications 1 à 7, dans lequel le récipient cosmétique comprend un couvercle (3) pouvant fermer de manière réversible la zone de réception (2) et le compartiment de stockage (7) est disposé dans le couvercle (3).

9. Récipient cosmétique selon l'une quelconque des revendications 1 à 8, dans lequel la zone d'application (8) est formée d'organza.

10. Récipient cosmétique selon l'une quelconque des revendications 2 à 9, dans lequel un côté de maintien opposé à la zone d'application (7) est prévu, dans lequel en particulier une poignée (10) est prévue, qui est disposée sur le côté de maintien.

11. Récipient cosmétique selon l'une quelconque des revendications 1 à 10, dans lequel deux ailes (12), en particulier en un matériau imperméable aux composés organiques volatils de faible poids moléculaire, sont prévues sur un côté de maintien opposé à la zone d'application (8), en particulier sur la poignée (10), qui peuvent être disposées de manière à entourer l'applicateur, dans lequel il est en particulier prévu que les ailes (12) présentent une connexion (13) amovible.

12. Procédé de stockage et d'application d'une préparation liquide ou semi-solide destinée à être appliquée sur la peau, **caractérisé en ce que** la préparation liquide ou semi-solide est stockée avec une drogue solide à l'intérieur d'un récipient cosmétique selon l'une quelconque des revendications 1 à 11, dans lequel la drogue est séparée spatialement de la préparation pour la durée du stockage, dans lequel la séparation spatiale est au moins partiellement supprimée lors de l'application, dans lequel l'applicateur est utilisé pour l'application, dans lequel une réception réversible de la préparation dans le compartiment de stockage (7) est possible au moins dans une zone d'application (8) de l'applicateur.
